# EUROPEAN PATENT SPECIFICATION

(11) **EP 1 617 747 B1**
(45) Date of publication and mention of the grant of the patent: **17.01.2007**
(21) Application number: 04728843.6
(22) Date of filing: 22.04.2004
(51) Int. Cl.: A47G 25/28

(54) **GARMENT HANGER**
KLEIDERBÜGEL
CINTRE

(30) Priority: 23.04.2003 GB 0309236
(43) Date of publication of application: 25.01.2006
(73) Proprietor: BRAITRIM (U.K.) LIMITED, London NW10 6NB (GB)
(72) Inventor: HUNT, William, L., Buckinghamshire SL8 S5BU (GB); HUNT, William, J., Buckinghamshire SL2 4PG (GB)
(74) Representative: Want, Clifford James
(86) International application number: PCT/GB2004/001710
(87) International publication number: WO 2004/093614

(56) References cited:
- DE-A- 1 927 624
- US-A- 2 543 810
- US-A- 2 984 394
- US-A- 3 257 049
- US-A- 3 679 100
- US-A- 4 040 546
- US-A- 5 137 191
- US-A- 6 000 587

## Description

This invention relates to a garment hanger.

Moulded garment hangers for, for example, suits and jackets are known. In such known garment hangers, arms and a central suspension portion linking the arms are a one-piece moulding and the garment hangers typically have an inverted U-shaped transverse cross-section with the arms racked forward. Back and front faces of the garment hanger are substantially parallel or diverge in a vertical direction in use to allow removal of a core of a moulding tool used in their manufacture from the arms and central suspension portion. As a result, in use a centre of gravity of the garment hanger and a suspended garment aligned below the suspension hook tends to tip the garment hanger forward so that a lower back edge of the garment hanger is pushed into the suspended garment, that is, in use the rear face of the garment hanger tends to be inclined to the vertical with the lower edge protruding into a garment suspended on the garment hanger. This tends to mark the garment. Such garment hangers are also subject to twisting under torsion when loaded with a garment.

Attempts have been made to mitigate these disadvantages by raising a split line joining an upper and lower half of an injection mould used to mould a garment hanger having an inverted U-shaped cross-section and providing an inward curving portion of the garment hanger below the split line. That is, the split line may be raised to some 5 mm above a bottom edge of the garment hanger compared with a normal 1 or 2 mm. However, a radius of the inward curving portion is limited by a thickness of walls of the garment hanger, since an inward curving portion comprising an undercut would prevent removal of the garment hanger from the mould, and therefore it is not possible to provide a suitable curvature to overcome the problem of the lower edge of the garment hanger marking the garment. Attempts have also been made to overcome these disadvantages by blow moulding hollow garment hangers. However, blow moulded garment hangers tend to have greatly varying wall thicknesses throughout the garment hanger, which are difficult to control. It is therefore difficult to ensure that greatest thicknesses occur where greatest strength is required. There are also difficulties with blow moulded garment hangers of incorporating bosses for receiving a suspension hook of the garment hanger.

Solid wooden garment hangers without protruding edges are known, but are relatively expensive compared with moulded garment hangers of plastics material.

A hanging package display unit is also known from US 6,209,763 and US 2001/0015363 including a first hanger having a central neck member, with the neck member having a receiving slot therein for receiving a hook member of a second like hanger and securing means for holding the first and second hangers together.

Document US-A-5 137 191 discloses a garment hanger having at least one arm connected to a suspension portion , the garment hanger comprising a first moulded portion, forming a first proportion of the at least one arm and the suspension portion, mated and joined to at least a second moulded portion , forming a remaining second proportion of the at least one arm and suspension portion, to form a hollow, enclosed monocoque structure, wherein, in use, the first moulded portion is an upper portion of the garment hanger and at least one of the portions of the at least a second moulded portion is a lower portion of the garment hanger.

It is an object of the present invention at least to ameliorate the aforesaid disadvantages in the prior art.

According to a first aspect of the invention there is provided a garment hanger as defined in claim 1.

Advantageously, the first proportion is substantially a half.

Conveniently, the first portion is welded to at least one of the portions of the at least a second portion.

Optionally, the first portion is joined to at least one of the portions of the at least a second portion by adhesive.

Optionally, the first portion is joined to at least one of the portions of the at least a second portion by cooperating clip means on the first portion and on the at least one of the portions of the at least a second portion.

Advantageously, the garment hanger comprises bar means substantially horizontal in use for supporting a garment thereby.

Preferably, the bar means is an extruded bar.

Advantageously, the bar means comprises a bar at least partially coated with a non-slip material having a higher coefficient of friction than material of the bar.

Preferably, the bar is coated on an upper, in use, surface.

Advantageously, the bar is coated on at least one substantially vertical, in use, surface.

Advantageously, the garment hanger has two opposed arms and the bar means passes through apertures in the opposed arms of the garment hanger such that opposed ends of the bar means are each located within the garment hanger.

Conveniently, an upper face of the bar means is substantially convex and a lower face is substantially planar.

Advantageously, the garment hanger comprises two opposed arms and loop engaging means for supporting a garment from a loop thereby.

Conveniently, the loop engaging means comprise a respective loop engaging means in a respective cavity in each of the opposed arms.

Advantageously, the garment hanger comprises bar means, and the loop engaging means comprise a respective loop engaging means in respective cavities in the bar means proximate respective opposed ends of the bar means.

Advantageously, the garment hanger is at least partially of translucent or transparent material.

Preferably, the garment hanger comprises alignment means for aligning the first portion with at least one of the portions of the at least a second portion for joining the first portion to the at least one of the portions of the at least a second portion.

Conveniently, the garment hanger comprises engagement means for engaging suspension means of a further garment hanger for suspending the further garment hanger from the engagement means.

Advantageously, the engagement means are located in the suspension portion.

Preferably, the engagement means are hook means.

According to a second aspect of the invention, there is provided a method as defined in claim 21.

Preferably, the first proportion is substantially one half.

Conveniently, the step of joining the first portion to at least a second portion includes at least one of adhering, welding or connecting with cooperating clip means located on the first portion and on at least one portion of the at least a second portion.

Advantageously, the garment hanger has two opposed arms, and the method comprises the further steps of: providing apertures proximate outer extremities of the arms; providing bar means; and inserting the bar means through the apertures such that when the first portion is joined to the at least a second portion opposed ends of the bar means are located within the garment hanger.

Conveniently, the step of providing bar means comprises extruding a bar.

Preferably, the step of extruding the bar includes co-extruding a non-slip coating on the bar.

Advantageously, the step of moulding at least a second portion comprises moulding loop engaging means in the at least a second portion.

Advantageously, the step of moulding at least a second portion comprises moulding engagement means in the at least a second portion for engaging suspension means of a further garment hanger for suspending the further garment hanger from the garment hanger.

Preferably, the step of moulding engagement means comprises moulding engagement means in the suspension portion.

Preferably, the step of moulding engagement means comprises moulding hook means.

The invention will now be described, by way of example, with reference to the accompanying drawings in which:
Figure 1 is an exploded view of a first embodiment of a garment hanger according to the invention;
Figure 2 is an enlarged view of part B of the garment hanger of Figure 1;
Figure 3 is a perspective view of the garment hanger of Figure 1;
Figure 4 is a top view of the garment hanger of Figure 1;
Figure 5 is an end view of the garment hanger of Figure 1;
Figure 6 is a front view of the garment hanger of Figure 1;
Figure 7 is an enlarged transverse cross-section along line A-A of Figure 6 in a direction of the arrow-headed lines;
Figure 8 is an enlarged perspective view of a clip, in an open position, suitable for joining the upper and lower portions of the garment hanger of Figure 1;
Figure 9 is an enlarged perspective view of the clip of Figure 8, in a closed position;
Figure 10 is perspective view of an underside of a second embodiment of a garment hanger according to the invention;
Figure 11 is an enlarged perspective view of a hook receiving aperture in the underside of the garment hanger of Figure 10;
Figure 12 is a front view of the garment hanger of Figure 10;
Figure 13 is a transverse cross-section view along line C-C of Figure 12, in a direction of the arrow-headed lines;
Figure 14 is a further perspective view of an underside of the garment hanger of Figure 10; and
Figure 15 is an enlarged perspective view of a finger for a skirt loop in the underside of the garment hanger of Figure 10.

In the Figures, like reference numerals denote like parts.

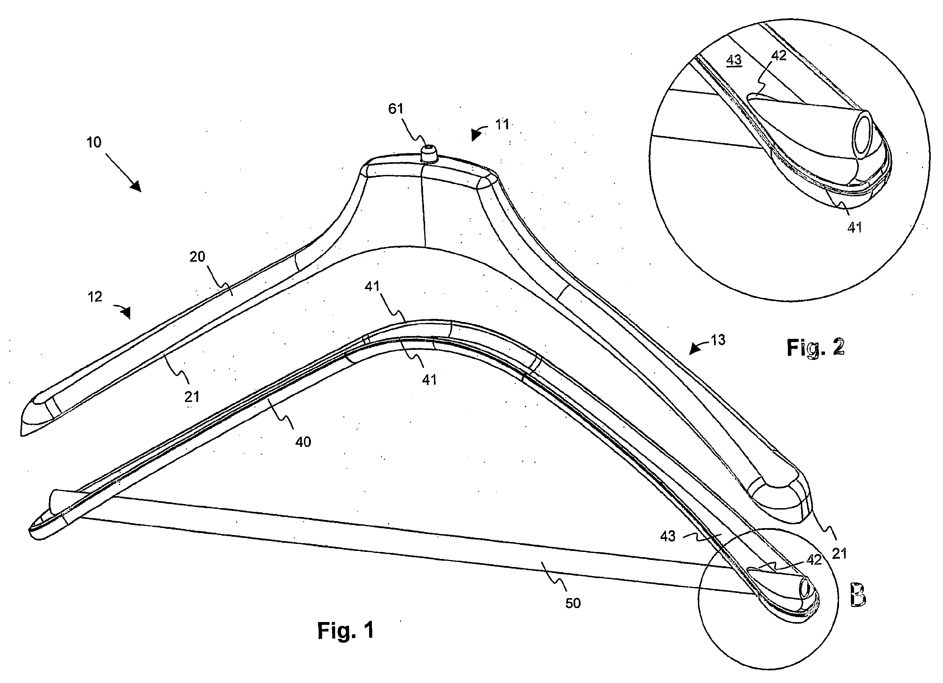

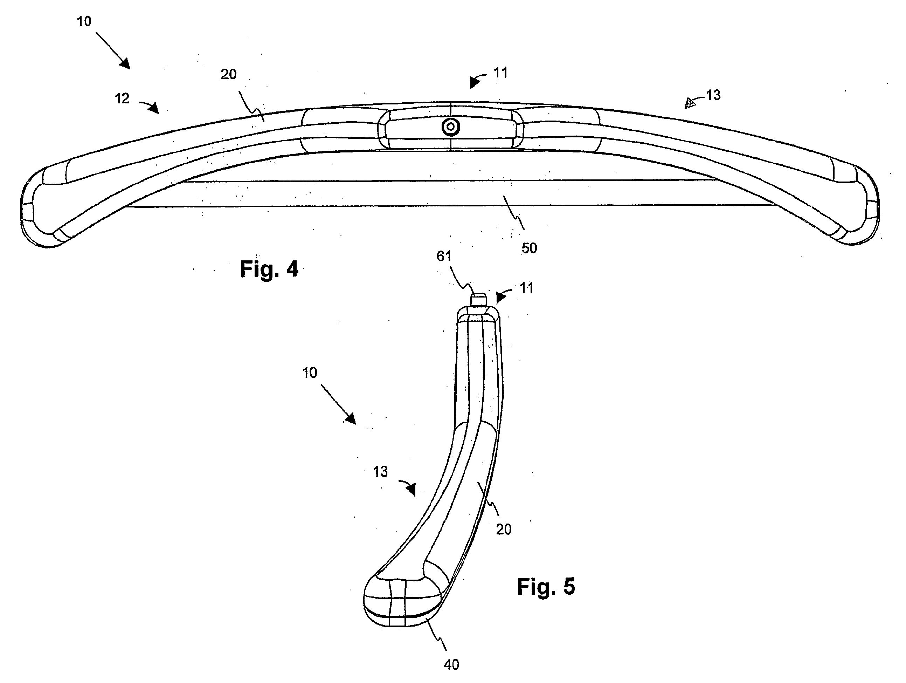

A first embodiment 10 of a garment hanger according to the invention, as shown in Figures 1 to 7, has an upper portion 20 and a lower portion 40, which together form a central suspension portion 11 and opposed arms 12, 13 of the garment hanger. The upper portion is of a substantially similar shape to a known one-piece moulded garment hanger. That is, the arms are inclined downwards from the horizontal in a direction away from the central suspension portion, are raked forward and have somewhat bulbous extremities. That is, as best seen in Figures 4 and 5, a front face of the garment hanger is concave and a rear face of the garment hanger is convex, to follow a shape of shoulders of a garment to be supported by the garment hanger. Upper faces of the arms are joined to an upper face of the central suspension portion by an upwardly concave portion and a lower face of the central suspension portion is downwardly concave.

The upper portion 20 forms a major portion of the central suspension portion and substantially half of each of the opposed arms and the lower portion 40 comprises the remaining proportions of the central suspension portion and each of the opposed arms. However, the upper and lower portions of the garment hanger may comprise different proportions of the garment hanger than substantially one half.

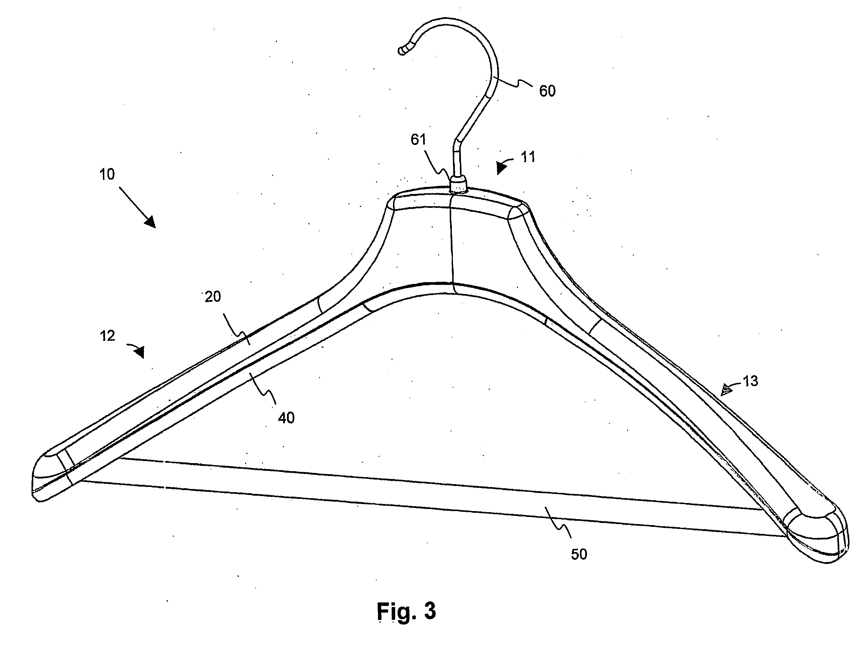

Extremities of the arms 12, 13 are joined by a trouser or skirt bar 50. However, a garment hanger according to the invention does not necessarily have such a bar. As shown in Figure 3, the garment hanger is provided with a suspension hook 60 by which the garment hanger may be suspended, a shank of which suspension hook is joined by a boss 61 to the central suspension portion 11.

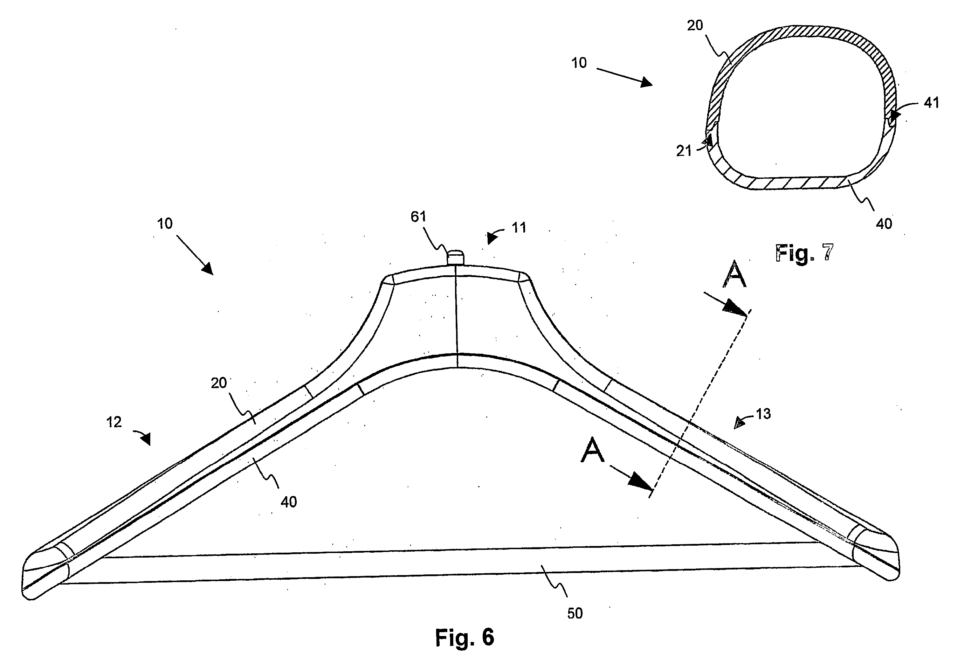

As best seen in Figure 7, and to some extent in Figure 1, the upper portion 20 has a substantially inverted U-shaped transverse cross-section and the lower portion 40 has a substantially U-shaped transverse cross-section such that a peripheral edge 21 of the upper portion 20 mates with a peripheral edge 41 of the lower portion 40. As shown in Figure 7, the peripheral edges 21, 41 are joggled or dog-legged to improve mating engagement and location of the upper portion 20 with the lower portion 40.

Referring to Figures 1 and 2, round-end slots 42, having a vertical projection corresponding to a transverse cross-section of the skirt or trouser bar 50, are provided in a lower face 43 of the lower portion 40, proximate outer extremities of the arms 12, 13, to receive respective opposed ends of the bar 50.

With opposed ends of the bar 50 located in the respective slots 42, the upper portion 20 is welded or joined by adhesive to the lower portion 40. Alternatively the upper portion 20 is fastened by clips to the lower portion 40. Where the garment hanger comprises more than two portions methods of joining the various portions may differ from each other in a same garment hanger.

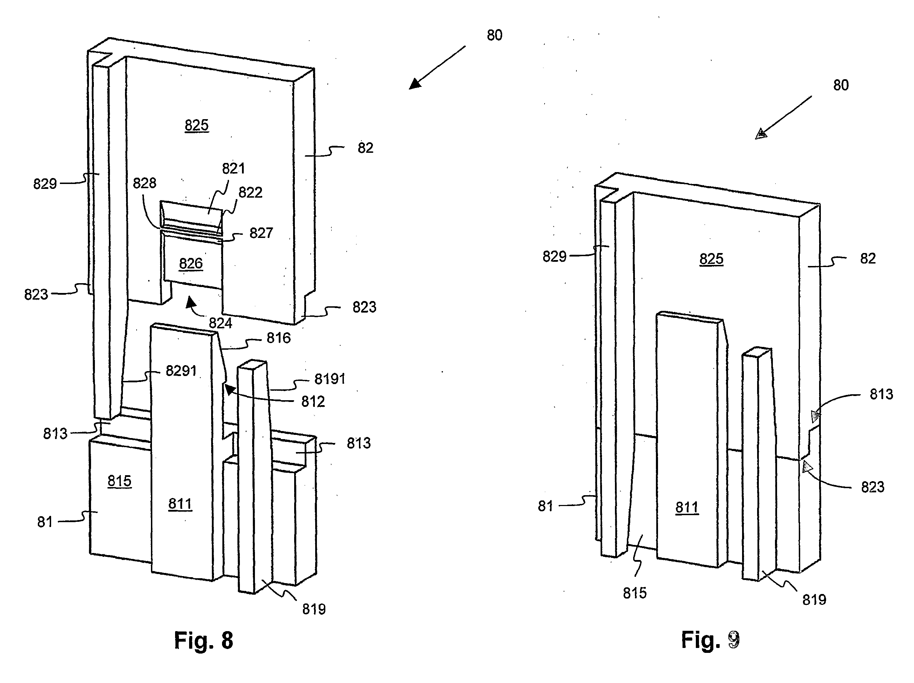

A suitable clip 80 is illustrated in Figures 8 and 9, substantially enlarged with respect to Figure 1 for clarity, the clip having, as illustrated, a lower male portion 81 and an upper female portion 82. The male portion 81 has a resilient tang 811 with a shoulder 812 for engaging an edge 822 of a notch 821 in the female portion 82.

Opposed outer portions 813 of a mating edge of the male portion 81, both sides of the resilient tang 811, are rebated to form dog-legs for mating with co-operating rebated mating edge portions 823 of the female portion 82. The female portion 82 is provided with an indentation 824 between the rebated portions 823 of the mating edge to bridge a non-rebated central portion of the mating edge of the male portion corresponding with a location of the central tang 811. The tang 811 is located on an outer face 815 of the male portion 81 and has a projecting portion projecting beyond the mating edge such that an inner face of the projecting portion is substantially coplanar with the outer face 815 of the male portion 81. The inner face of the projecting portion is provided proximate an end of the projecting portion remote from remaining portions of the male portion 81 with the shoulder 812 and a ramped cam surface 816, tapering away from the shoulder 812 in a direction away from the mating edge of the male portion 81.

The female portion 82 is provided with a channel 826 for receiving the projecting portion of the tang 811, terminated remotely from the mating edge of the female portion with a cam portion 827 for cooperating with the cam portion 816 of the tang 811. Inward of the cam 827, and separated therefrom by a bridge 828 of an outer face 825 of the female portion 82, there is provided the notch 821 for receiving both the shoulder 812 and a portion of the cam portion 816 of the tang 811.

The clip 80 is further provided with two guide posts 819, 829. A first guide post 819 is located on the outer face 815 of the male portion 81 parallel to, and on a first side of, the tang 811 and projects from the outer face 815 past the mating edge of the male portion towards the outer face 825 of the female portion 82 as the male and female portions are brought together. The second guide post 829 is located on the outer face 825 of the female portion and extends beyond the mating edge of the female portion, such that the second guide post 829 projects towards the male portion, on a second side of the tang 811 opposed to the first side, as the male and female portion are brought together. Inner faces 8191, 8291 of the projecting portions of the first and second guide posts 819, 829 respectively are tapered away from the respective faces 825, 815 with which they engage respectively.

In use, as the male and female portions 81, 82 are brought together, the tapered faces 8191, 8291 of the guide posts 819, 829 engage the outer faces 825, 815 of the opposing portion respectively to align the male portion with the female portion. As the female and male portions are brought closer together in alignment the projecting portion of the tang 811 engages and slides along the channel 826 in the outer face 825 of the female portion 82 until the cam surface 816 of the tang 811 engages the terminal cam surface 827 of the channel 826. The cam surfaces 816, 827 cooperate to raise the cam portion of the tang 811 resiliently to the outer face 825 of the female portion 825 to cross the bridging portion 828 of the outer face of the female portion between the channel 826 and the notch 821 until a portion of the cam portion of the tang 811 resiliently enters the notch 821 and the shoulder 812 lockingly engages the edge 822 of the notch 821, which edge 822 is substantially perpendicular to the outer face 825 of the female portion. Substantially simultaneously the rebated mating edge portions 823 of the female portion engage the rebated mating edge portions 813 of the male portion 81.

With the first portion 20 and second portion 40 of the garment hanger joined together, the garment hanger 10 forms a hollow monocoque structure in which the majority of stresses to which the garment hanger is subject are carried by an outer skin of the garment hanger. As a result, there is no requirement for internal strengthening ribs. This improves the aesthetic appeal of the garment hanger compared with known garment hangers. In addition, instead of an opaque material, one or more of translucent, tinted or transparent materials may optionally be used, since no disfiguring internal ribs are visible. The absence of internal ribs also avoids sink marks on the surfaces of the garment hanger, which are associated with one-piece moulded garment hangers of the prior art.

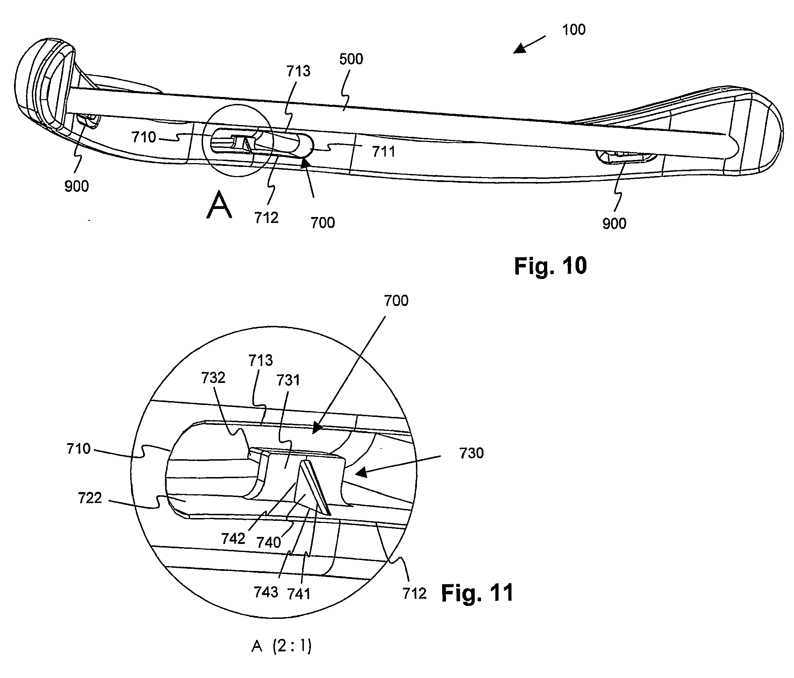

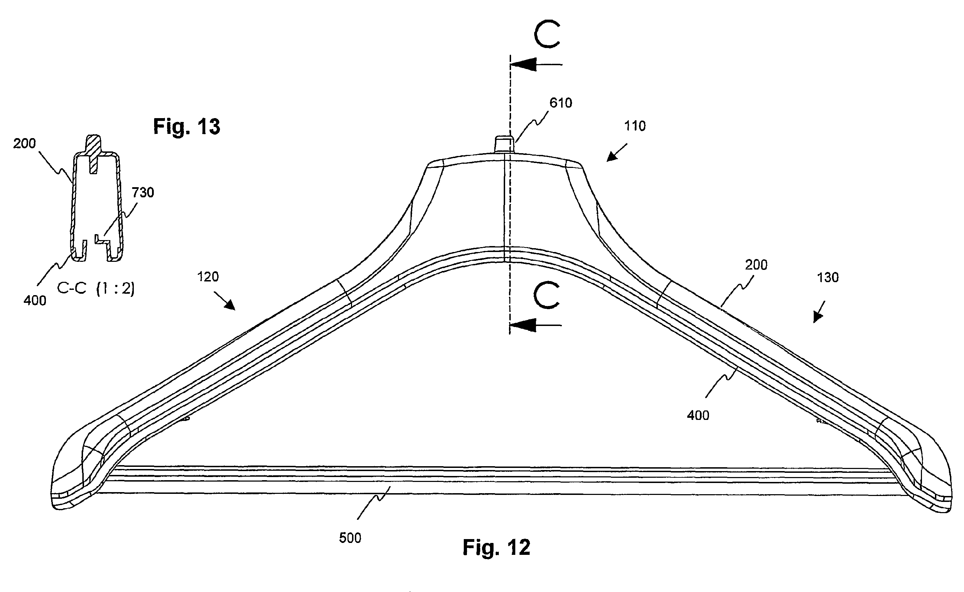

A second embodiment 100 of a garment hanger according to the invention, as shown in Figures 10 to 15, has a similar overall structure to that of the first embodiment 10. As best seen in Figure 12, the second embodiment therefore has an upper portion 200 and a lower portion 400, which together form a central suspension portion 110 and opposed arms 120, 130 of the garment hanger. As in the first embodiment 10, the upper portion 200 is of a substantially similar shape to a known one-piece moulded garment hanger. That is, the arms 120, 130 are inclined downwards from the horizontal in a direction away from the central suspension portion 110, are raked forward and have somewhat bulbous extremities. That is, as best seen in Figure 10, a front face of the garment hanger is concave and a rear face of the garment hanger is convex, to follow a shape of shoulders of a garment to be supported by the garment hanger. As best seen in Figure 12, upper faces of the arms 120, 130 are joined to an upper face of the central suspension portion 110 by an upwardly concave portion and a lower face of the central suspension portion is downwardly concave.

The upper portion 200 forms a major portion of the central suspension portion 110 and substantially half of each of the opposed arms 120, 130 and the lower portion 400 comprises the remaining proportions of the central suspension portion 110 and each of the opposed arms 120, 130. However, the upper and lower portions of the garment hanger may comprise different proportions of the garment hanger than substantially one half.

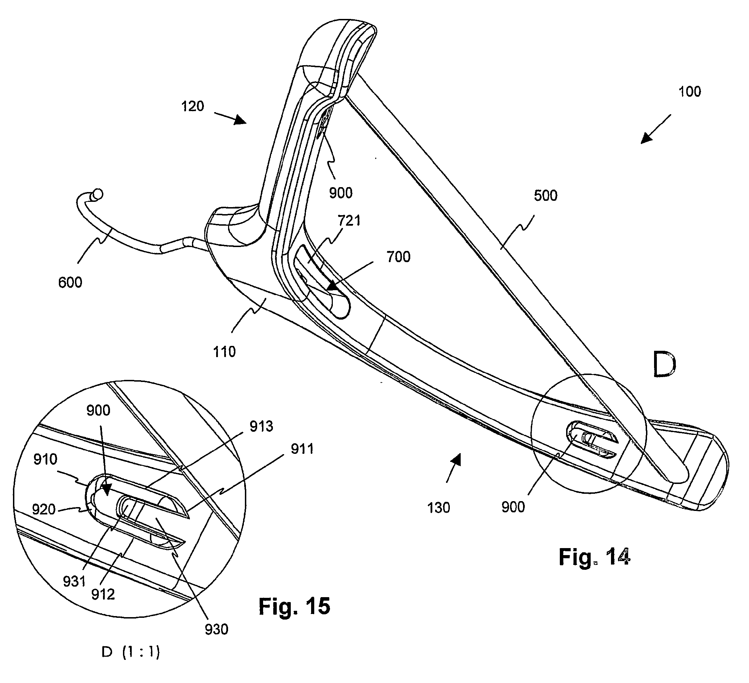

Extremities of the arms 120, 130 are joined by a trouser or skirt bar 500. However, a garment hanger according to the invention does not necessarily have such a bar. As shown in Figure 14, the garment hanger is provided with a suspension hook 600 by which the garment hanger may be suspended, a shank of which suspension hook 600 is joined by a boss 610, shown in Figure 12, to the central suspension portion 110.

As best seen in Figures 10 and 11, an underside face of the central suspension portion 110 is additionally provided with a central elongate aperture 700 opening into the central suspension portion, the elongate aperture having a major longitudinal axis along a longitudinal axis of the central suspension portion 110, for receiving an upper, in use, portion of a suspension hook of a further garment hanger. The elongate aperture 700 has opposed semicircular, inwardly concave, opposed ends 710, 711 transverse to the longitudinal axis thereof and parallel planar opposed sides 712, 713 parallel to the longitudinal axis thereof. A peripheral wall extends inwards of the central suspension portion 110 from the elongate aperture 700 to form a slot-like channel extending inwards of the central suspension portion from the elongate aperture, having a front planar portion 721, shown in Figure 14, and a rear planar portion 722, shown in figure 11, parallel and opposed to the front planar portion both substantially parallel to front and rear faces of the central suspension portion.

The rear planar portion 722 of the peripheral wall is provided with a projection 730, L-shaped in cross-section, extending partially across the slot-like channel from, and central of, an innermost edge of the rear planar portion of the peripheral wall, such that a base 731 of the L-shaped projection is perpendicular to the planar portion 722 of the peripheral wall and an upright leg portion 732 of the L-shaped projection extends from an inner edge of the base portion inwards of the central suspension portion 110, substantially parallel to the rear planar portion 722 of the peripheral wall.

A right-angle triangular rib 740 supports the L-shaped projection 730, a hypotenuse edge 741 of the right-angle triangular rib 740 extending central of the L-shaped projection 730 from a first position proximate the inner edge of the base portion 731 to a second position on the rear portion 722 of the peripheral wall proximate an underside face of the central suspension portion. A first of the other two edges 742 of the right-angle triangular rib 740 extends from the first position to the peripheral wall 722 and a second of the other two edges 743 extends from the second position to the base portion 731 of the L-shaped projection 730.

As best shown in Figures 14 and 15 the second embodiment 100 of a garment hanger according to the invention is also provided on underside faces of the arms, proximate outer extremities thereof, with fingers 930 extending inwards of the garment hanger from which, for example, a skirt may be suspended by loops fixed thereto. Proximate an outer extremity of each arm there is provided an elongate aperture 900 in the underside face thereof, the aperture having a longitudinal axis lying along a longitudinal axis of the respective arm 120, 130. Extending inward of the aperture there is provided a concave peripheral wall 920 having a quadrant transverse cross-section such that the peripheral wall is curved inwards of the aperture from the underside face of the respective arm 120, 130, to form a pierced recess in the underside face of the respective arm. The elongate apertures 900 have opposed semicircular, inwardly concave, opposed ends 910, 911 transverse to the longitudinal axis thereof and parallel planar opposed sides 912, 913 parallel to the longitudinal axis thereof. Extending inwards of the aperture 900 from an outer concave end 911 thereof towards the central suspension portion there is provided an elongate finger 930 spaced from the peripheral wall 920 thereof. The finger 930 is provided at an inner end thereof with an outwardly, i.e. downwardly in use, angled portion 931.

Referring again to Figures 10 and 11, in use a known suspension hook, of, for example, metal, of a further garment hanger may be inserted through the central elongate aperture 700, into the central elongate channel, past and over the leg portion 732 of the L-shaped projection 730 to be suspended from the base portion 731 of the L-shaped projection. In this manner the garment hanger of the invention and the further garment hanger may be suspended one above another from the suspension hook 600 of the monocoque garment hanger of the invention. The further garment hanger, for example a clip garment hanger or a letter box garment hanger, may be for suspending a lower garment such as a skirt or trousers, so that an upper garment, such as a jacket, shirt or blouse, may be suspended on the arms 120, 130 of the monocoque garment hanger of the invention and an associated or matching lower garment, for example, suspended from the further garment hanger suspended from the monocoque garment hanger 100.

It will be understood that other shapes of projection than the L-shaped projection 730, for example any hook-like projection, may be used within the central elongate channel from which to suspend a further garment hanger by a suspension hook thereof. Alternatively, a clip arrangement within the central elongate channel may be used to engage the suspension hook of a further garment hanger.

Referring again to Figures 14 and 15, alternatively, or in addition, a skirt may be suspended by skirt loops from the skirt loop fingers 830 of the monocoque garment hanger 100. The downwardly angled portion 831 of the finger facilitates passage of a loop onto the finger 830 so that portions of the loop are located between the finger 830 and the peripheral wall 820. Alternatively, a strapped garment may be suspended by straps of the garment from the fingers 830.

It will be understood that such skirt loop fingers 830 may optionally be moulded in the lower face of the bar 500, or proximate the outer extremities of the arms 120, 130, whether or not a bar 500 is present.

The monocoque structure is resistive to torsional strain so that there is less propensity to torsional twisting of the garment hanger than in garment hangers of the prior art. It has been found that a wall thickness of 1.5 millimetres provides sufficient strength. Most importantly, the continuous skin of the garment hanger has no protruding edge to mark a garment hung on the garment hanger. The absence of a protruding edge also makes handling the garment hanger less unpleasant than handling garment hangers of the prior art.

Because of the method used to attach the bar to the arms of the garment hanger, an extruded bar may be used rather than moulded bars of the prior art, although moulded bars are also suitable for use in a garment hanger according to the invention. The bar may be completely or partially coated with a non-slip, high friction material, such as rubber, in order to grip a garment looped over the bar. Preferably the coating is at least on the top surface of the bar and may also be on at least one of the front and back faces. If the bar is extruded, the rubber coating may be co-extruded with the bar. This allows use of a thinner coating of rubber, which is relatively expensive compared with typical plastics material of the bar, than other methods of applying a non-slip surface.

Although the bar is illustrated as a hollow right circular cylinder, other cross-sectional shapes of bar than circular may be employed. For example, the bar may have a lozenge or semi-circular cross-section with a convex upper surface and a substantially planar lower surface. It will be appreciated that the shapes of the slots 42, located proximate the extremities of the arms 12, 13 to accommodate opposed ends of the bar 50, may be chosen according to the cross-sectional shape of the bar.

Skirt loop fingers 930 may optionally be moulded in a controlled cavity in the lower face of the bar, or, whether or not a bar is present, proximate the outer extremities of the arms.

In addition, the monocoque garment hanger may be made of more than two portions, for example one upper portion and two or more lower portions.

Although a garment hanger having two arms has been described, it will be apparent that the invention is equally applicable to a garment hanger having, for example, a single arm.

## Claims

1. A garment hanger (10) having at least one arm (12) connected to a suspension portion (11), the garment hanger comprising a first moulded portion (20), forming a first proportion of the at least one arm and the suspension portion, mated and joined to at least a second moulded portion (40), forming a remaining second proportion of the at least one arm and suspension portion, to form a hollow, enclosed monocoque structure without internal strengthening ribs in which a majority of stresses to which the garment hanger is subject are carried by an outer skin of the garment hanger, wherein, in use, the first moulded portion (20) is an upper portion of the garment hanger and at least one of the portions of the at least a second moulded portion (40) is a lower portion of the garment hanger.

2. A garment hanger as claimed in claim 1, wherein the first proportion (20) is substantially a half.

3. A garment hanger as claimed in claims 1 or 2, wherein the first portion (20) is welded to at least one of the portions of the at least a second portion (40).

4. A garment hanger as claimed in any of the preceding claims, wherein the first portion (20) is joined to at least one of the portions of the at least a second portion (40) by adhesive.

5. A garment hanger as claimed in any of the preceding claims, wherein the first portion (20) is joined to at least one of the portions of the at least a second portion (40) by cooperating clip means (80) on the first portion and on the at least one of the portions of the at least a second portion.

6. A garment hanger as claimed in any of the preceding claims, comprising bar means (50) substantially horizontal in use for supporting a garment thereby.

7. A garment hanger as claimed in claim 6, wherein the bar means (50) is an extruded bar.

8. A garment hanger as claimed in claims 6 or 7, wherein the bar means comprises a bar at least partially coated with a non-slip material having a higher coefficient of friction than material of the bar.

9. A garment hanger as claimed in claim 8, wherein the bar is coated on an upper, in use, surface.

10. A garment hanger as claimed in claim 8, wherein the bar is coated on at least one substantially vertical, in use, surface.

11. A garment hanger as claimed in any of claims 6 to 10, wherein the garment hanger has two opposed arms (12, 13) and the bar means (50) passes through apertures (42) in the opposed arms of the garment hanger such that opposed ends of the bar means are each located within the garment hanger.

12. A garment hanger as claimed in any of claims 6 to 11, wherein an upper face of the bar means is substantially convex and a lower face is substantially planar.

13. A garment hanger as claimed in any of the preceding claims, comprising two opposed arms (120, 130) and loop engaging means (930) for supporting a garment from a loop thereby.

14. A garment hanger as claimed in claim 13, wherein the loop engaging means comprise a respective loop engaging means (930) in a respective cavity (900) in each of the opposed arms (120, 130).

15. A garment hanger as claimed in claim 13, comprising bar means, wherein the loop engaging means comprise a respective loop engaging means in respective cavities in the bar means proximate respective opposed ends of the bar means.

16. A garment hanger as claimed in any of the preceding claims, wherein the garment hanger is at least partially of translucent or transparent material.

17. A garment hanger as claimed in any of the preceding claims, comprising alignment means (819, 829) for aligning the first portion with at least one of the portions of the at least a second portion for joining the first portion to the at least one of the portions of the at least a second portion.

18. A garment hanger as claimed in any of the preceding claims, comprising engagement means (730) for engaging suspension means of a further garment hanger for suspending the further garment hanger from the engagement means.

19. A garment hanger as claimed in claim 18, wherein the engagement means are located in the suspension portion (110).

20. A garment hanger as claimed in claims 18 or 19, wherein the engagement means are hook means.

21. A method of manufacturing a garment hanger having at least one arm connected to a suspension portion, comprising the steps of
a. moulding an upper first portion (20) of the garment hanger (10) comprising a first proportion of the at least one arm (12) and suspension portion (11);
b. moulding at least a second lower portion (40) of the garment hanger comprising a remaining second proportion of the at least one arm and suspension portion; and
c. joining the upper first portion (20) to the at least a second lower portion (40) to form a hollow enclosed monocoque structure without internal strengthening ribs in which a majority of stresses to which the garment hanger is subject are carried by an outer skin of the garment hanger.

22. A method as claimed in claim 21, wherein the first proportion is substantially one half.

23. A method as claimed in claims 21 or 22, wherein the step of joining the upper first portion (20) to at least a second lower portion (40) includes at least one of adhering, welding or connecting with cooperating clip means located on the upper first portion and on at least one portion of the at least a second lower portion.

24. A method as claimed in any of claims 21 to 23, wherein the garment hanger has two opposed arms (12, 13), comprising the further steps of:
a. providing apertures (42) proximate outer extremities of the arms;
b. providing bar means (50); and
c. inserting the bar means through the apertures such that when the upper first portion is joined to the at least a second lower portion opposed ends of the bar means are located within the garment hanger.

25. A method as claimed in claim 24, wherein the step of providing bar means comprises extruding a bar.

26. A method as claimed in claim 25, wherein the step of extruding the bar includes co-extruding a non-slip coating on the bar.

27. A method as claimed in any of claims 21 to 26, wherein the step of moulding at least a second lower portion (400) comprises moulding loop engaging means (930) in the at least a second lower portion.

28. A method as claimed in any of claims 21 to 27, wherein the step of moulding at least a second lower portion (400) comprises moulding engagement means (730) in the at least a second lower portion for engaging suspension means of a further garment hanger for suspending the further garment hanger from the garment hanger.

29. A method as claimed in claim 28, wherein the step of moulding engagement means comprises moulding engagement means in the suspension portion (110).

30. A method as claimed in claims 28 or 29, wherein the step of moulding engagement means comprises moulding hook means.

## Patentansprüche

1. Kleiderbügel (10) mit mindestens einem Arm (12), der mit einem Aufhängungsabschnitt (11) verbunden ist, wobei der Kleiderbügel einen ersten geformten Abschnitt (20) aufweist, der eine erste Proportion des mindestens einen Arms und des Aufhängungsabschnitts bildet, zusammengeführt und verbunden mit mindestens einem zweiten geformten Abschnitt (40), der eine verbleibende zweite Proportion des mindestens einen Arms und des Aufhängungsabschnitts bildet, so dass eine hohle, eingeschlossene, selbsttragende Schalenkonstruktion ohne innere Verstärkungsrippen gebildet wird, wobei ein Großteil der Belastungen, denen der Kleiderbügel ausgesetzt ist, durch eine Außenhaut des Kleiderbügels getragen wird, wobei es sich im Einsatz bei dem ersten geformten Abschnitt (20) um einen oberen Abschnitt des Kleiderbügels handelt, und wobei es sich bei mindestens einem der Abschnitte des mindestens eines zweiten geformten Abschnitts (40) um einen unteren Abschnitt des Kleiderbügels handelt.

2. Kleiderbügel nach Anspruch 1, wobei die erste Proportion (20) im Wesentlichen eine Hälfte darstellt.

3. Kleiderbügel nach Anspruch 1 oder 2, wobei der erste Abschnitt (20) an mindestens einen der Abschnitte des mindestens einen zweiten Abschnitts (40) geschweißt ist.

4. Kleiderbügel nach einem der vorstehenden Ansprüche, wobei der erste Abschnitt (20) mit mindestens einem der Abschnitte des mindestens einen zweiten Abschnitts (40) durch Klebstoff verbunden ist.

5. Kleiderbügel nach einem der vorstehenden Ansprüche, wobei der erste Abschnitt (20) mit mindestens einem der Abschnitte des mindestens einen zweiten Abschnitts (40) durch zusammenwirkende Klammereinrichtungen (80) an dem ersten abschnitt und an dem mindestens einen Abschnitt des mindestens einen zweiten Abschnitts verbunden ist.

6. Kleiderbügel nach einem der vorstehenden Ansprüche, wobei dieser eine Stangeneinrichtung (50) umfasst, die im Einsatz im Wesentlichen horizontal ist, so dass sie **dadurch** ein Kleidungsstück trägt.

7. Kleiderbügel nach Anspruch 6, wobei die Stangeneinrichtung (50) eine extrudierte Stange darstellt.

8. Kleiderbügel nach Anspruch 6 oder 7, wobei die Stangeneinrichtung eine Stange umfasst, die zumindest teilweise mit einem rutschfesten Material mit einem höheren Reibungskoeffizienten als dem Reibungskoeffizienten des Materials der Stange überzogen ist.

9. Kleiderbügel nach Anspruch 8, wobei die Stange auf einer im Einsatz oberen Oberfläche überzogen ist.

10. Kleiderbügel nach Anspruch 8, wobei die Stange auf einer im Einsatz im Wesentlichen vertikalen Oberfläche überzogen ist.

11. Kleiderbügel nach einem der Ansprüche 6 bis 10, wobei der Kleiderbügel zwei entgegengesetzte Arme (12, 13) aufweist, und wobei die Stangeneinrichtung (50) durch Öffnungen (42) in den entgegengesetzten Armen des Kleiderbügels verläuft, so dass die entgegengesetzten Enden der Stangeneinrichtung jeweils innerhalb des Kleiderbügels angeordnet sind.

12. Kleiderbügel nach einem der Ansprüche 6 bis 11, wobei eine Oberseite der Stangeneinrichtung im Wesentlichen konvex ist, und wobei eine Unterseite im Wesentlichen planar ist.

13. Kleiderbügel nach einem der vorstehenden Ansprüche, wobei dieser zwei entgegengesetzte Arme (120, 130) und Schlaufeneingriffseinrichtungen (930) zum Tragen eines Kleidungsstücks an einer Schlaufe **dadurch** umfasst.

14. Kleiderbügel nach Anspruch 13, wobei die Schlaufeneingriffseinrichtungen eine entsprechende Schlaufeneingriffseinrichtung (930) in einer entsprechenden Vertiefung (900) in jedem der entgegengesetzten Arme (120, 130) umfasst.

15. Kleiderbügel nach Anspruch 13, wobei dieser eine Stangeneinrichtung umfasst, wobei die Schlaufeneingriffseinrichtungen eine entsprechende Schlaufeneingriffseinrichtung in entsprechenden Vertiefungen in der Stangeneinrichtung umfassen, in der Nähe der entsprechenden entgegengesetzten Enden der Stangeneinrichtung.

16. Kleiderbügel nach einem der vorstehenden Ansprüche, wobei der Kleiderbügel aus einem zumindest teilweise durchscheinenden oder transparenten Material besteht.

17. Kleiderbügel nach einem der vorstehenden Ansprüche, wobei der Kleiderbügel Ausrichtungseinrichtungen (819, 829) zum Ausrichten des ersten Abschnitts mit mindestens einem der Abschnitte des mindestens einen zweiten Abschnitts umfasst, um den ersten Abschnitt mit dem mindestens einen Abschnitt des mindestens einen zweiten Abschnitts zusammenzuführen.

18. Kleiderbügel nach einem der vorstehenden Ansprüche, wobei der Kleiderbügel Eingriffseinrichtungen (730) zum Eingriff der Aufhängungseinrichtung eines weiteren Kleiderbügels umfasst, um den weiteren Kleiderbügel an der Eingriffseinrichtung aufzuhängen.

19. Kleiderbügel nach Anspruch 18, wobei die Eingriffseinrichtungen in dem Aufhängungsabschnitt (110) angeordnet sind.

20. Kleiderbügel nach Anspruch 18 oder 19, wobei es sich bei den Eingriffseinrichtungen um Hakeneinrichtungen handelt.

21. Verfahren zur Herstellung eines Kleiderbügels mit mindestens einem Arm, der mit einem Aufhängungsabschnitt verbunden ist, wobei das Verfahren die folgenden Schritte umfasst:
a) das Formen eines oberen ersten Abschnitts (20) des Kleiderbügels (10), der eine erste Proportion des mindestens einen Arms (12) und des Aufhängungsabschnitts (11) umfasst;
b) das Formen mindestens eines zweiten unteren Abschnitts (40) des Kleiderbügels, der eine verbleibende zweite Proportion des mindestens einen Arms und des Aufhängungsabschnitts umfasst; und
c) das Zusammenführen des oberen ersten Abschnitts (20) mit dem mindestens einen zweiten unteren Abschnitt (40), so dass eine hohle, eingeschlossene, selbsttragende Schalenkonstruktion ohne innere Verstärkungsrippen gebildet wird, in der ein Großteil der Belastungen, denen der Kleiderbügel ausgesetzt ist, von einer Außenhaut des Kleiderbügels getragen wird.

22. Verfahren nach Anspruch 21, wobei die erste Proportion im Wesentlichen eine Hälfte darstellt.

23. Verfahren nach Anspruch 21 oder 22, wobei der Schritt des Zusammenführens des oberen ersten Abschnitts (20) mit dem mindestens einen zweiten unteren Abschnitt (40) mindestens das Kleben, Schweißen oder Verbinden mit zusammenwirkenden Klammereinrichtungen aufweist, die an dem oberen ersten Abschnitt und an dem mindestens einen Abschnitt des mindestens einen zweiten unteren Abschnitts angeordnet ist.

24. Verfahren nach einem der Ansprüche 21 bis 23, wobei der Kleiderbügel zwei entgegengesetzte Arme (12, 13) aufweist, wobei das Verfahren die folgenden weiteren Schritte umfasst:
a) das Bereitstellen von Öffnungen (42) in der Nähe der äußeren Enden der Arme;
b) das Bereitstellen einer Stangeneinrichtung (50); und
c) das Einführen der Stangeneinrichtung durch die Öffnungen, so dass, wenn der obere erste Abschnitt mit dem mindestens einen zweiten unteren Abschnitt zusammengeführt wird, die entgegengesetzten Enden der Stangeneinrichtung innerhalb des Kleiderbügels angeordnet sind.

25. Verfahren nach Anspruch 24, wobei der Schritt des Bereitstellens einer Stangeneinrichtung das Extrudieren einer Stange umfasst.

26. Verfahren nach Anspruch 25, wobei der Schritt des Extrudierens der Stange das gemeinsame Strangpressen eines rutschfesten Überzugs auf der Stange umfasst.

27. Verfahren nach einem der Ansprüche 21 bis 26, wobei der Schritt des Formens des mindestens einen zweiten unteren Abschnitts (400) das Formen von Schlaufeneingriffseinrichtungen (930) in dem mindestens einen zweiten unteren Abschnitt umfasst.

28. Verfahren nach Anspruch 21 bis 27, wobei der Schritt des Formens des mindestens einen zweiten unteren Abschnitts (400) das Formen von Eingriffseinrichtungen (730) in dem mindestens einen zweiten unteren Abschnitt umfasst, für einen Eingriff der Aufhängungseinrichtung eines weiteren Kleiderbügels, um den weiteren Kleiderbügel an dem Kleiderbügel aufzuhängen.

29. Verfahren nach Anspruch 28, wobei der Schritt des Formens der Eingriffseinrichtungen das Formen der Eingriffseinrichtungen in dem Aufhängungsabschnitt (110) umfasst.

30. Verfahren nach einem der Ansprüche 28 oder 29, wobei der Schritt des Formens der Eingriffseinrichtungen das Formen von Hakeneinrichtungen umfasst.

## Revendications

1. Cintre à vêtement (10) ayant au moins un bras (12) connecté à une portion de suspension (11), le cintre à vêtement comprenant une première portion moulée (20), formant une première proportion de l'au moins un bras et de la portion de suspension, conjuguée et reliée à au moins une deuxième portion moulée (40), formant une deuxième proportion restante de l'au moins un bras et de la portion de suspension, pour former une structure monocoque fermée creuse sans nervures de renforcement internes dans lesquelles une majorité de contraintes auxquelles le cintre à vêtement est soumis sont portées par une peau externe du cintre à vêtement, dans lequel, lors de son utilisation, la première portion moulée (20) est une portion supérieure du cintre à vêtement et au moins une des portions de l'au moins une deuxième portion moulée (40) est une portion inférieure du cintre à vêtement.

2. Cintre à vêtement selon la revendication 1, dans lequel la première proportion (20) est essentiellement une moitié.

3. Cintre à vêtement selon la revendication 1 ou 2, dans lequel la première portion (20) est soudée à au moins une des portions dé l'au moins une deuxième portion (40).

4. Cintre à vêtement selon l'une quelconque des revendications précédentes, dans lequel la première portion (20) est reliée à au moins une des portions de l'au moins une deuxième portion (40) par adhésif.

5. Cintre à vêtement selon l'une quelconque des revendications précédentes, dans lequel la première portion (20) est reliée à au moins une des portions de l'au moins une deuxième portion (40) par des moyens de pincement coopérants (80) sur la première portion et sur l'au moins une des portions de l'au moins une deuxième portion.

6. Cintre à vêtement selon l'une quelconque des revendications précédentes, comprenant des moyens de barre (50) essentiellement horizontaux lors de leur utilisation pour supporter un vêtement par ceux-ci.

7. Cintre à vêtement selon la revendication 6, dans lequel les moyens de barre (50) sont une barre extrudée.

8. Cintre à vêtement selon la revendication 6 ou 7, dans lequel les moyens de barre comprennent une barre au moins partiellement enduite d'un matériau antidérapant ayant un coefficient de friction supérieur au matériau de la barre.

9. Cintre à vêtement selon la revendication 8, dans lequel la barre est enduite sur une surface supérieure lors de son utilisation.

10. Cintre à vêtement selon la revendication 8, dans lequel la barre est enduite sur au moins une surface essentiellement verticale lors de son utilisation.

11. Cintre à vêtement selon l'une quelconque des revendications 6 à 10, dans lequel le cintre à vêtement possède deux bras opposés (12, 13) et les moyens de barre (50) passent à travers des ouvertures (42) dans les bras opposés du cintre à vêtement de sorte que des extrémités opposées des moyens de barre sont chacune situées au sein du cintre à vêtement.

12. Cintre à vêtement selon l'une quelconque des revendications 6 à 11, dans lequel une face supérieure des moyens de barre est essentiellement convexe et une face inférieure est essentiellement plane.

13. Cintre à vêtement selon l'une quelconque des revendications précédentes, comprenant deux bras opposés (120, 130) et des moyens d'engagement en boucle (930) pour supporter un vêtement à partir d'une boucle par ceux-ci.

14. Cintre à vêtement selon la revendication 13, dans lequel les moyens d'engagement en boucle comprennent un moyen d'engagement en boucle respectif (930) dans une cavité respective (900) dans chacun des bras opposés (120, 130).

15. Cintre à vêtement selon la revendication 13, comprenant des moyens de barre, dans lequel les moyens d'engagement en boucle comprennent un moyen d'engagement en boucle respectif dans des cavités respectives dans les moyens de barre de manière proximale aux extrémités opposées respectives des moyens de barre.

16. Cintre à vêtement selon l'une quelconque des revendications précédentes, dans lequel le cintre à vêtement est au moins partiellement en matériau translucide ou transparent.

17. Cintre à vêtement selon l'une quelconque des revendications précédentes, comprenant des moyens d'alignement (819, 829) pour aligner la première portion avec au moins une des portions de l'au moins une deuxième portion pour relier la première portion à l'au moins une des portions de l'au moins une deuxième portion.

18. Cintre à vêtement selon l'une quelconque des revendications précédentes, comprenant des moyens d'engagement (730) pour engager les moyens de suspension d'un autre cintre à vêtement pour suspendre l'autre cintre à vêtement à partir des moyens d'engagement.

19. Cintre à vêtement selon la revendication 18, dans lequel les moyens d'engagement sont situés dans la portion de suspension (110).

20. Cintre à vêtement selon la revendication 18 ou 19, dans lequel les moyens d'engagement sont des moyens de crochet.

21. Procédé de fabrication d'un cintre à vêtement ayant au moins un bras connecté à une portion de suspension, comprenant les étapes consistant à :
a. mouler une première portion supérieure (20) du cintre à vêtement (10) comprenant une première proportion de l'au moins un bras (12) et de la portion de suspension (11) ;
b. mouler au moins une deuxième portion inférieure (40) du cintre à vêtement comprenant une deuxième proportion restante de l'au moins un bras et de la portion de suspension ; et
c. relier la première portion supérieure (20) à l'au moins une deuxième portion inférieure (40) pour former une structure monocoque fermée creuse sans nervures de renforcement internes dans lesquelles une majorité de contraintes auxquelles le cintre à vêtement est soumis sont portées par une peau externe du cintre à vêtement.

22. Procédé selon la revendication 21, dans lequel la première proportion est essentiellement une moitié.

23. Procédé selon la revendication 21 ou 22, dans lequel l'étape consistant à relier la première portion supérieure (20) à au moins une deuxième portion inférieure (40) comprend au moins une étape d'adhésion, de soudage ou de connexion avec des moyens de pincement coopérants situés sur la première portion supérieure et sur au moins une portion de l'au moins une deuxième portion inférieure.

24. Procédé selon l'une quelconque des revendications 21 à 23, dans lequel le cintre à vêtement possède deux bras opposés (12, 13), comprenant les étapes supplémentaires consistant à :
a. fournir des ouvertures (42) de manière proximale aux extrémités externes des bras ;
b. fournir des moyens de barre (50) ; et
c. insérer les moyens de barre à travers les ouvertures de sorte que lorsque la première portion supérieure est reliée à l'au moins une deuxième portion inférieure, des extrémités opposées des moyens de barre sont situées au sein du cintre à vêtement.

25. Procédé selon la revendication 24, dans lequel l'étape consistant à fournir des moyens de barre comprend l'extrusion d'une barre.

26. Procédé selon la revendication 25, dans lequel l'étape consistant à extruder la barre comprend la co-extrusion d'un revêtement antidérapant sur la barre.

27. Procédé selon l'une quelconque des revendications 21 à 26, dans lequel l'étape consistant à mouler au moins une deuxième portion inférieure (400) comprend le moulage de moyens d'engagement en boucle (930) dans l'au moins une deuxième portion inférieure.

28. Procédé selon l'une quelconque des revendications 21 à 27, dans lequel l'étape consistant à mouler au moins une deuxième portion inférieure (400) comprend le moulage de moyens d'engagement (730) dans l'au moins une deuxième portion inférieure pour engager des moyens de suspension d'un autre cintre à vêtement pour suspendre l'autre cintre à vêtement à partir du cintre à vêtement.

29. Procédé selon la revendication 28, dans lequel l'étape consistant à mouler des moyens d'engagement comprend le moulage de moyens d'engagement dans la portion de suspension (110).

30. Procédé selon la revendication 28 ou 29, dans lequel l'étape consistant à mouler des moyens d'engagement comprend le moulage de moyens de crochet.
